# EUROPEAN PATENT APPLICATION

(11) **EP 1 132 630 A1**
(43) Date of publication of application: **12.09.2001**
(21) Application number: 00301798.5
(22) Date of filing: 06.03.2000
(51) Int. Cl.: F16B 19/00, F16B 21/02

(54) **Fastener**

(71) Applicant: Cannon Technologies Ltd., New Milton, Hampshire BH25 5NU (GB)
(72) Inventor: Reddicliffe, Edward, New Milton, Hampshire BH25 5NU (GB)
(74) Representative: Haley, Stephen

(57) **Abstract**

A fastener for fixing a component (C) to a body (M), such as a mounting surface or post, and which is designed to act as a one-piece component, comprises a head portion (2) and a tail portion (4) joined together by a longitudinally-extending body (3) having a smaller cross-sectional area than both the head portion (2) and the tail portion (4), and a deformable shoulder (5) extending outwardly from the body to the tail portion (4) or head portion (2), wherein the head portion (2) has a greater cross-sectional area than the tail portion (4) and the tail portion (4) is non-circular in cross-section.

## Description

The present invention relates to a fastener for fixing components, and in particular electrical panels, brackets and other items of similar nature, to a mounting surface.

Traditionally the installation of electrical panels and similar items such as wiring brackets or electrical equipment has been accomplished by the use of nuts and bolts, which is time consuming and can be difficult. In some instances the nuts are encaged in thin spring fingers which are used to clip the nuts in place.

Some "quick-fit" fasteners exist already. One type is of two part construction, whereby a central bayonet piece is pushed in to expand an outer shell thus securing the fastener in its receiving hole. These fasteners can be inadvertently popped open by strong forces being applied to the items they are securing.

Other fasteners have a central screw instead of a push-in bayonet. The screw also expands the outer shell of the fastener when it is screwed in to create a secure fixing. However, screws of this type require many rotations, which is time consuming. Also, on severe loading, the screw can shear its mating threads, particularly if the outer shell is of a plastic construction. Another disadvantage of this type of fastener is that the two components can become separated and lost.

According to the present invention, a fastener comprises a head portion and a tail portion joined together by a longitudinally-extending body having a smaller cross-section than both the head portion and the tail portion, and a deformable shoulder extending outwardly from the body toward the tail portion on the head portion, wherein the tail portion is non- circular in cross-section.

The fastener is designed to act as a one-piece component, and is both simple and quick to use. The tail portion of the fastener is inserted, in use, through fixing holes of substantially corresponding shape and size in the components to be fastened together. Subsequent rotation of the fastener about its longitudinal axis results in the tail portion becoming out of register with the fixing holes, such that the tail portion is retained therein and acts to fasten the components together. The deformable shoulder portion prevents subsequent rotation of the fastener, back to its initial position, and thereby secures the fastening.

According to the invention there is also provided, a fastener assembly comprising a fastener as described above and a washer, wherein the washer is a close fit, and preferably a push fit, over the tail portion of the fastener. This assembly provides a convenient way of attaching a fastener to a component, for subsequent fastening to, or mounting on, another component.

The fastener of the present invention is useful for fastening together a wide variety of components, and for mounting components on to a mounting surface, or mounting post. Typically, the component to be mounted is a panel or bracket for fixing to a mounting post or mounting position on a cabinet or similar structure.

In such applications, international conventions or defacto standards have developed which often designate square holes in the mounting post or mounting position. Therefore, the tail portion of the fastener is preferably square in cross-section. However, other tail geometries may be used, according to the shape of the holes in the components to be fixed together. Usually, for ease of manufacture, the holes will take the shape of a polygon, although, other, irregular, shapes may be envisaged.

The present invention is now further described with reference to the accompanying drawings, in which:
Figure 1 is a perspective view of the intended mode of action of a fastener of the present invention;
Figure 2 is a cross-sectional view of a mounting assembly employing a fastener of the present invention;
Figure 3 is a front view of a washer, which forms part of a fastener assembly of the present invention;
Figure 4 is a side view of a fastener of the present invention;
Figure 5 is a perspective view of a fastener of the present invention, with a head portion having a ridge for turning by a user;
Figure 6 is a perspective view of a fastener of the present invention, with a head portion of slotted configuration; and
Figure 7 is a perspective view of a further fastener according to the invention.

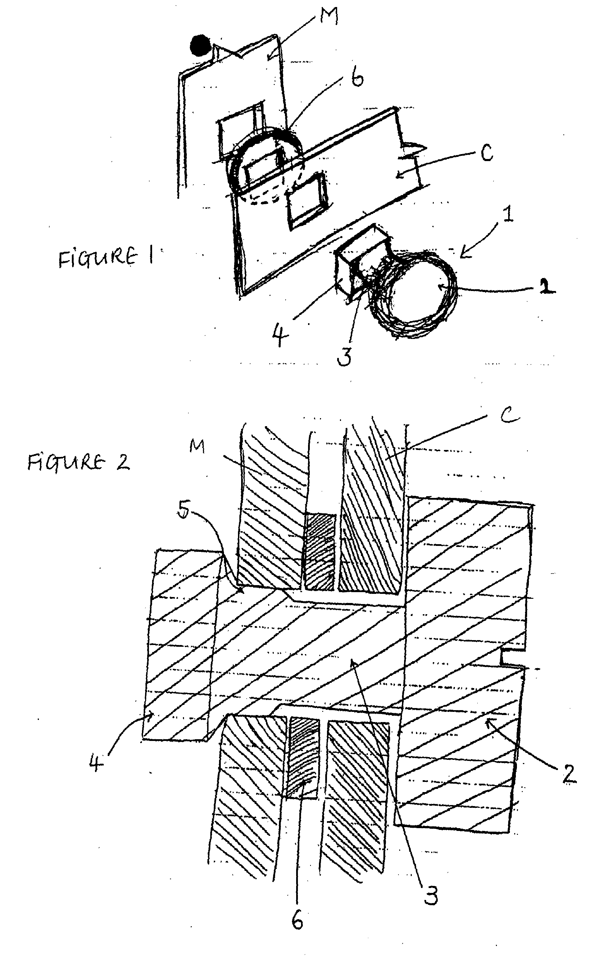

With reference to Figures 1 and 2, a component C is to be fixed to mounting post M by way of a fastener 1 of the present invention. The fastener has a head portion 2 connected through a body 3 to a tail portion 4 which is square in cross-section.

The tail portion 4 is designed to pass through substantially correspondingly shaped and sized fixing holes in the component and the mounting post with a close, comfortable fit. The head portion 2 has a larger cross-sectional area than the tail portion, and therefore the mounting holes, and is large enough to prevent the fastener passing through the fixing holes, and out the other side of the mounting post.

On rotation of the fastener about its longitudinal axis, the tail portion becomes out of register with the fixing holes in both the component and, more importantly, the mounting post, thereby preventing removal of the fastener. Reference is made to Figure 2 in this regard. In the preferred embodiment of the present invention, in which the tail portion is of square geometry, the fastener is preferably rotated through 45°, as in this position the maximum area of the fastener will be positioned behind the rear face of the mounting post, leading to the most secure fastening.

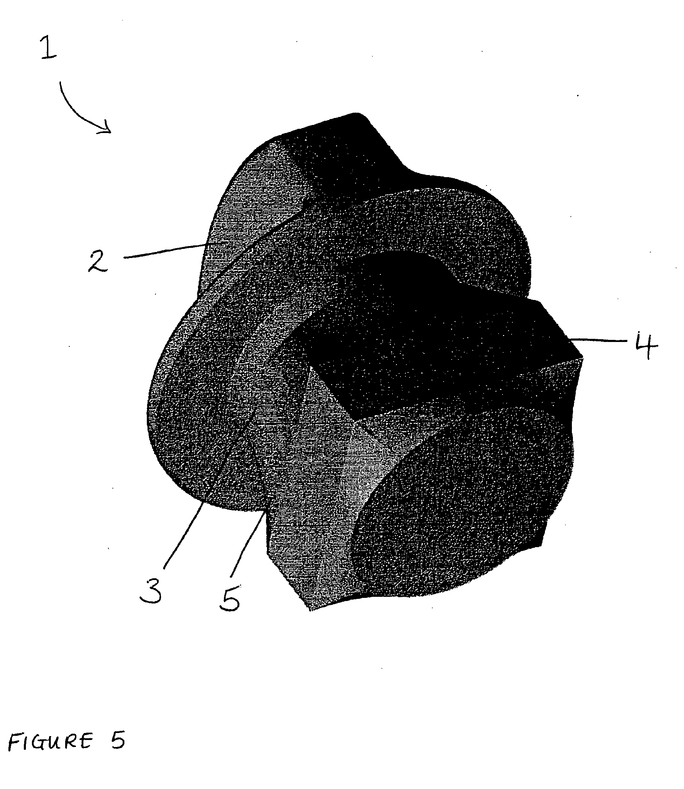

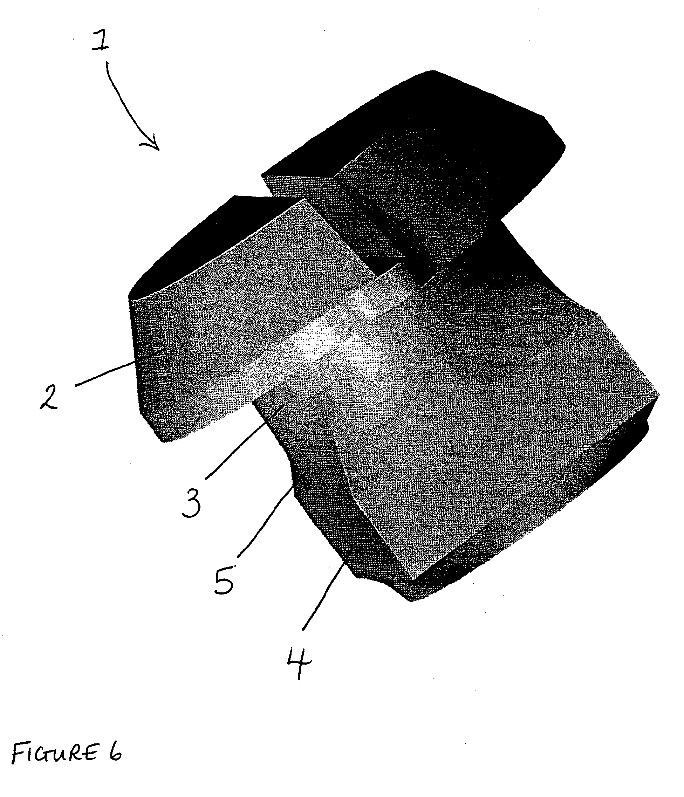

Rotation of the fastener is achieved via manipulation of the head portion 2. The head portion may be designed for manual operation, or for operation using a tool. For instance, the head portion may be of wing nut geometry or have a ridge or other projections or knurls thereon (as shown in Figure 5), to allow finger operation; it may be of hexagonal or slotted configuration (as shown in Figure 6) for spanner, screwdriver or coin operation; or it may comprise a hexagonal depression in its upper surface, for operation using an Allen key.

Additionally, the fastener has a deformable shoulder 5 which extends outwardly from the body 3 to the tail portion 4 or head portion. The shoulder 5 is compressed or deformed during rotation of the fastener, by contact with the sides of the fixing hole in the mounting post, as shown in Figure 2. The shoulder acts as a resistance to further rotation, thereby preventing the fastener returning to its initial position, which would lead to unfastening of the component from the mounting post. The shoulder also pulls the head (or tail) portion 2 of the fastener inwardly, with the result that the component being mounted and the mounting post are squeezed together to provide a firm mounting.

The simplest way of providing the fastener with a deformable shoulder is to make the fastener itself out of relatively deformable material, for instance plastics material, rubbers or soft metals. Alternatively, and in particular when a more rigid fastener is required, for instance made from hard plastics or hard metals, the shoulder can be provided with a suitable degree of springlike compressibility by creating at least one hollow cavity under the shoulder, allowing the shoulder to compress on application of a force thereto.

As the fastener of the present invention is simple and quick to use, requiring sliding insertion through a fixing hole and then a single partial rotation, both assembly and dis-assembly are almost instantaneous. However, in some instances the fastener may be required to remain connected to a mountable component, so as not be to lost on detachment of the component from its mounting. For this purpose, a retention washer 6 may be fitted over the tail portion of the fastener after insertion into the component to be mounted.

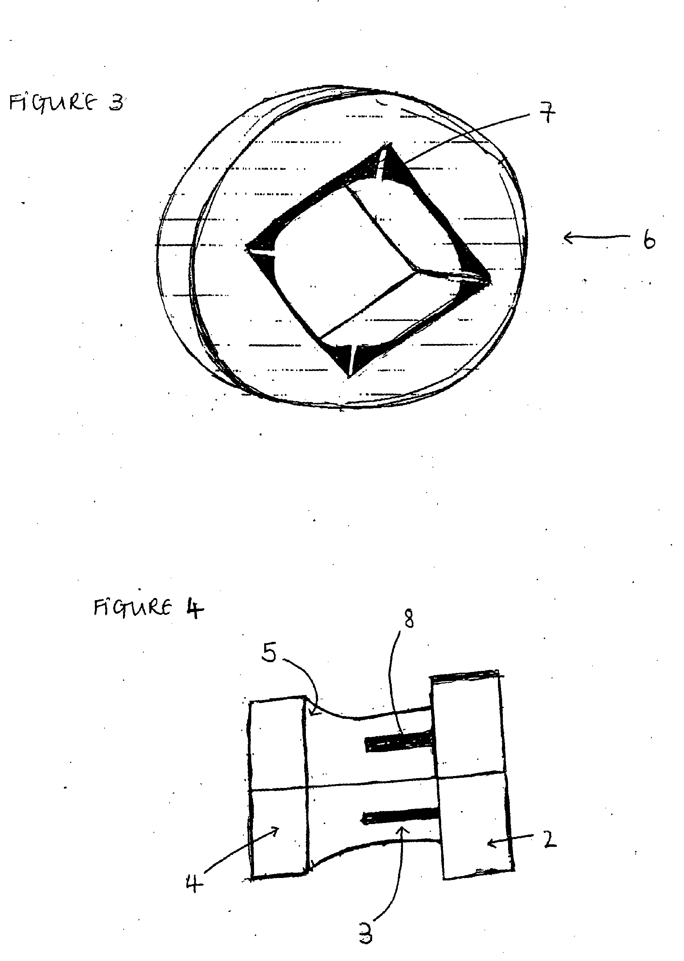

The washer 6 is a close fit, preferably a push fit, over the tail portion of the fastener, to avoid inadvertent detachment thereof. With reference to Figure 3, the washer may comprise deflectable projections 7, typically in the form of skirts, extending inwardly from its central hole. The projections readily deflect in one direction, to allow the washer to pass over the tail portion of the fastener, but do not easily deflect in the opposite direction, thus preventing casual disengagement of the washer and the fastener.

Alternatively, the washer may be made from a thin plastic material having a central hole therein of smaller cross-sectional area than the tail portion of the fastener. In this case, the washer will have sufficient elasticity to allow it to pass over the tail portion of the fastener in either direction, with the application of an appropriate amount of force.

With reference to Figure 4, the body 3 of the fastener may be provided with a plurality of projections 8, to aid securement of the fastener. These projections typically extend along the body in a longitudinal direction, and are preferably spaced at regular intervals around the body. In the preferred embodiment of the present invention, in which the tail portion of the fastener is square in geometry, preferably four projections are provided on the body of the fastener, each projection being aligned with a midpoint on a side of the tail portion of the fastener. On initial assembly, the projections will pass through the fixing holes in both the component and the mounting post. However, on rotation of the fastener, the projections will engage the sides of the fixing holes, aiding to prevent further rotation of the fastener, and effectively locking it in position.

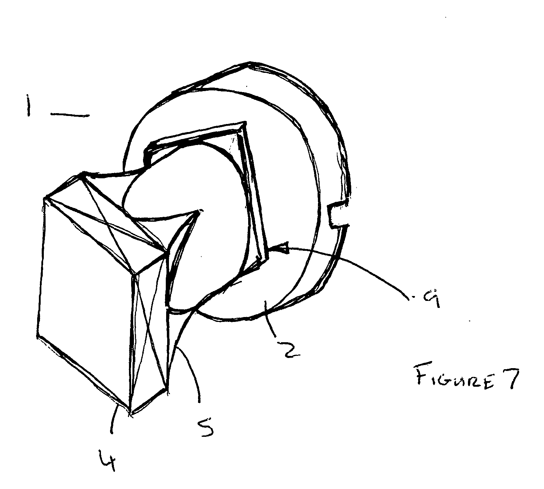

Figure 7 shows a further example of the present invention in which a fastener 1 has a configuration similar to that shown in figure 6, although with the provision of an additional boss 9 adjacent to the head portion 2. In this case the boss 9 is shaped so as to fit, when the fastener 1 is in a locking position into the hole in the component C to be fastened to provide additional retention force in the locked position. The dimensions of the boss 9 are dependent upon the material from which the fastener 1 is formed (particularly in relation to its longitudinal flexibility) and the compression required on the component C and mounting M during insertion of fastener 1. As can be seen from this example, it is preferable (although not essential) for the boss to have a shape corresponding to the hole in which it is to be inserted, and for the shape to be offset by 45° from the corresponding shaped portion of the tail portion 4.

As mentioned above, the fastener of the present invention is designed to act as a single component. The fastener may be manufactured as a single component, or it may be manufactured as a number of parts, which can then be connected together for simplified use.

By balancing the material characteristics of the fastener carefully to the desired application, the required amount of strength, resilience and resistance to abrasion can be achieved to provide effective and secure locking, fastener reusability and wear resistance. Additional strength can be achieved by using stronger materials for the fastener and/or by increasing the thickness, or depth, of the tail and head portions of the fastener.

It is envisaged that the fastener of the present invention can form part of a kit comprising a component, a body on to which the component is to be mounted, both of which comprise fixing holes of substantially corresponding shape and size to the tail portion of the fastener. The kit may also include a retention washer, as described above.

## Claims

1. A fastener comprising a head portion and a tail portion joined together by a longitudinally-extending body having a smaller cross-sectional area than both the head portion and the tail portion, and a deformable shoulder extending outwardly from the body to the tail portion or head portion, wherein the tail portion and the tail portion is non-circular in cross-section.

2. A fastener according to claim 1, wherein the tail portion is polygonal, and preferably square, in cross-section.

3. A fastener according to any preceding claim, wherein the shoulder portion comprises a hollow cavity therein.

4. A fastener according to claim 3, which is made from a non-deformable material.

5. A fastener according to any preceding claim, wherein the body comprises projections on its surface.

6. A fastener according to claim 2, wherein the body comprises longitudinally-extending projections on its surface, each projection being aligned with a midpoint on a side of the tail portion.

7. A fastener according to any preceding claim, which comprises a single component.

8. A fastener assembly comprising a fastener according to any preceding claim, and a washer, wherein the washer is a close fit or a push fit over the tail portion of the fastener.

9. A fastener assembly according to claim 8, wherein the washer comprises a central hole having a shape corresponding to the tail portion of the fastener, and further comprises deflectable projections extending inwardly from the hole.

10. A fastener assembly according to claim 8, wherein the washer has a central hole of smaller cross-sectional area than the tail portion and is made from an expandable material, so as to allow the washer to pass over the tail portion of the fastener.

11. A fastener according to any preceding claim, wherein a boss is provided on the body adjacent to the head portion.
